# EUROPEAN PATENT APPLICATION

(11) **EP 3 531 361 A1**
(43) Date of publication of application: **28.08.2019**
(21) Application number: 18201745.9
(22) Date of filing: 22.10.2018
(51) Int. Cl.: G06Q 30/02

(54) **SYSTEMS AND METHODS FOR MAKEUP CONSULTATION UTILIZING MAKEUP SNAPSHOTS**

(30) Priority: 26.02.2018 US 201862635035 P; 04.07.2018 US 201816027303
(71) Applicant: Perfect Corp., 231 New Taipei City (TW)
(72) Inventor: Wang, Yun-Ru, Taipei City (TW); Hsu, Chin-Yu, 115 Taipei City (TW)
(74) Representative: Stöckeler, Ferdinand

(57) **Abstract**

A client device coupled to a makeup consultation device establishes a makeup consultation session with the makeup consultation device. The client device obtains a plurality of makeup snapshots from the makeup consultation device, the makeup snapshots each depicting a different makeup effect on a digital image of the user. A user interface is displayed to the user, the user interface comprising a grouping of preview windows, each of the preview windows depicting one of the plurality of makeup snapshots. The client device obtains a selection of one of the preview windows for resuming the makeup consultation and transmits the selection to the makeup consultation device, where the makeup professional resumes the makeup consultation based on the makeup snapshot depicted in the selected preview window.

## Description

### CROSS-REFERENCE TO RELATED APPLICATION

This application claims priority to, and the benefit of, U.S. Provisional Patent Application entitled, "Stop Being Indecisive About Decisions of 1-1 Video Consultation," having Serial No. 62/635,035, filed on February 26, 2018, which is incorporated by reference in its entirety.

### TECHNICAL FIELD

The present disclosure generally relates to makeup consultation and more particularly, to systems and methods for utilizing snapshots to facilitate makeup consultation sessions.

### BACKGROUND

Although makeup professional commonly assist individuals with applying cosmetic products to achieve a desired look, it can be difficult at times for an individual to provide feedback on the exact combination of cosmetics that the individual prefers, particularly when there may be subtle differences between cosmetics recommend by the makeup professional. Therefore, there is a need for an improved platform for providing makeup professionals with feedback to facilitate the recommendation and virtual application of cosmetics during a makeup consultation session.

### SUMMARY

In accordance with one embodiment, a client device establishes a makeup consultation session with a makeup consultation device and obtains a plurality of makeup snapshots from the makeup consultation device, the makeup snapshots each depicting a different makeup effect on a digital image of a user. The client device displays a user interface to the user, the user interface comprising a grouping of preview windows, each of the preview windows depicting one of the plurality of makeup snapshots. The client device obtains a selection of one of the preview windows for resuming the makeup consultation and transmits the selection to the makeup consultation device, wherein the makeup professional resumes the makeup consultation based on the makeup snapshot depicted in the selected preview window.

Another embodiment is a system that comprises a memory storing instructions and a processor coupled to the memory. The processor is configured by the instructions to establish a makeup consultation session with a makeup consultation device and obtain a plurality of makeup snapshots from the makeup consultation device, the makeup snapshots each depicting a different makeup effect on a digital image of a user. The processor displays a user interface to the user, the user interface comprising a grouping of preview windows, each of the preview windows depicting one of the plurality of makeup snapshots. The processor obtains a selection of one of the preview windows for resuming the makeup consultation and transmits the selection to the makeup consultation device, wherein the makeup professional resumes the makeup consultation based on the makeup snapshot depicted in the selected preview window.

Another embodiment is a non-transitory computer-readable storage medium storing instructions to be implemented by a computing device having a processor, wherein the instructions, when executed by the processor, cause the computing device to establish a makeup consultation session with a makeup consultation device and obtain a plurality of makeup snapshots from the makeup consultation device, the makeup snapshots each depicting a different makeup effect on a digital image of a user. The processor displays a user interface to the user, the user interface comprising a grouping of preview windows, each of the preview windows depicting one of the plurality of makeup snapshots. The processor obtains a selection of one of the preview windows for resuming the makeup consultation and transmits the selection to the makeup consultation device, wherein the makeup professional resumes the makeup consultation based on the makeup snapshot depicted in the selected preview window.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Various aspects of the disclosure can be better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a networked environment for implementing a makeup consultation platform in accordance with various embodiments of the present disclosure.
FIG. 2 is a schematic diagram of the client device and the makeup consultation device of FIG. 1 in accordance with various embodiments of the present disclosure.
FIG. 3 is a top-level flowchart illustrating examples of functionality implemented as portions of the client device of FIG. 1 according to various embodiments of the present disclosure.
FIG. 4 illustrates an example user interface displayed on the makeup consultation device in FIG. 1 according to various embodiments of the present disclosure.
FIG. 5 illustrates an example user interface displayed on the client device in FIG. 1 where preview windows depicting makeup snapshots are displayed to the user according to various embodiments of the present disclosure.
FIG. 6 illustrates an example user interface displayed on the client device in FIG. 1 where the preview windows depict different types of makeup effects according to various embodiments of the present disclosure.
FIG. 7 illustrates an example user interface displayed on the client device in FIG. 1 where the preview windows depict progression of makeup effects applied by the makeup professional according to various embodiments of the present disclosure.
FIG. 8 illustrates an example user interface displayed on the client device in FIG. 1 where the user removes one of the preview windows according to various embodiments of the present disclosure.
FIG. 9 illustrates selection of a makeup snapshot in a user interface displayed on the client device in FIG. 1 for purposes of resuming the makeup consultation according to various embodiments of the present disclosure.
FIG. 10 illustrates a user interface displaying the selected makeup snapshot on the makeup consultation device in FIG. 1 according to various embodiments of the present disclosure.
FIG. 11 illustrates selection of a makeup snapshot in a user interface displayed on the client device in FIG. 1 for purposes of displaying product information according to various embodiments of the present disclosure.

### DETAILED DESCRIPTION

Although professional makeup professionals commonly assist individuals with applying cosmetic products to achieve a desired look, it can be difficult at times for an individual to provide feedback on the exact combination of cosmetics that the individual prefers, particularly when there may be subtle differences between cosmetics. Furthermore, at times, an individual participating in a makeup consultation session may not be entirely comfortable with providing feedback to the makeup professional. The present invention addresses shortcomings of conventional makeup consultation platforms by incorporating an improved user interface that allows user to quickly and efficiently select makeup snapshots provided by a makeup professional for purposes of highlighting desirable makeup results, thereby enhancing the quality and effectiveness of the makeup consultation session.

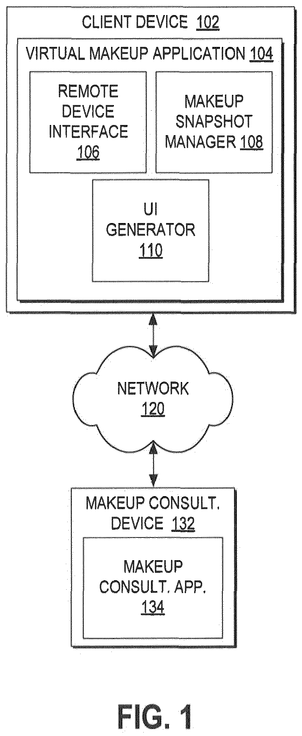

A description of a networked environment for implementing the techniques herein is now described followed by a discussion of the operation of the components within the system. FIG. 1 is a block diagram of a networked environment that includes a client device 102 and a makeup consultation device 132 in which makeup consultation sessions utilizing makeup snapshots may be implemented. Each of the client device 102 and the makeup consultation device 132 may be embodied as a computing device such as, but not limited to, a smartphone, a tablet computing device, a laptop, and so on. Both the client device 102 and the makeup consultation device 132 may be further equipped with digital content recording capabilities (*e*.*g*., front-facing camera).

The client device 102 is communicatively coupled to a makeup consultation device 132 via a network 120 such as, for example, the Internet, intranets, extranets, wide area networks (WANs), local area networks (LANs), wired networks, wireless networks, or other suitable networks, *etc.,* or any combination of two or more such networks. A makeup professional utilizes the makeup consultation device 132 to conduct makeup consultations with a user of the client device 102, where the makeup consultation device 132 transmits makeup snapshots to the client device 102, as described in more detail below.

The makeup snapshots may comprise digital images encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files or any number of other digital formats. Alternatively, the digital images may be derived from a still image of a video encoded in formats including, but not limited to, Motion Picture Experts Group (MPEG)-1, MPEG-2, MPEG-4, H.264, 360 degree video, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), or any number of other digital formats.

A virtual makeup application 104 executes on a processor of the client device 102 and includes a remote device interface 106, a makeup snapshot manager 108, and a user interface (Ul) generator 110. The remote device interface 106 is configured to establish a makeup consultation session with the makeup consultation device 132. The makeup snapshot manager 108 is configured to obtain a plurality of makeup snapshots from the makeup consultation device 132, where the makeup snapshots each depict a different makeup effect.

The UI generator 110 is configured to display a user interface to the user, where the user interface comprises a grouping of preview windows. For some embodiments, each of the preview windows depicts one of the plurality of makeup snapshots. The UI generator 110 is further configured to obtain a selection of one of the preview windows for resuming the makeup consultation. The remote device interface 106 then transmits the selection to the makeup consultation device 132. As described in more detail below, the makeup professional resumes the makeup consultation based on the makeup snapshot depicted in the selected preview window.

The makeup consultation device 132 includes a makeup consultation application 134 executed on a processor of the makeup consultation device 132 for conducting makeup consultations with the user of the client device 102. The makeup professional utilizes the makeup consultation application 134 to suggest makeup effects to the user of the client device 102 and to perform virtual application of the makeup effects onto a facial region of the user.

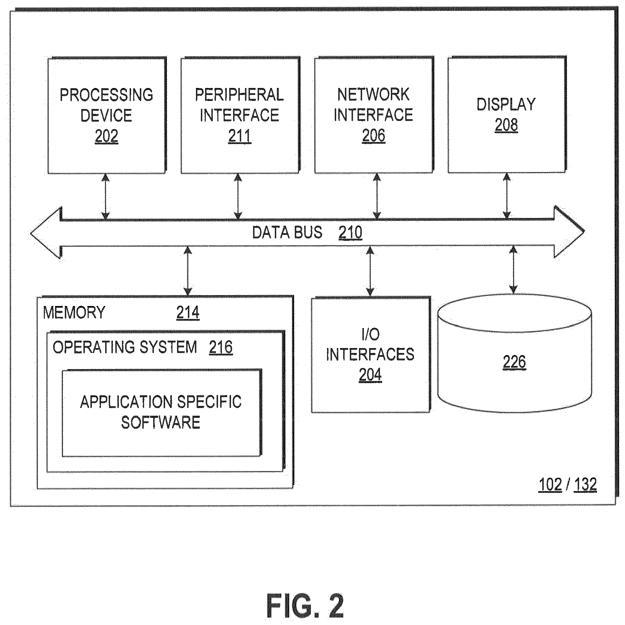

FIG. 2 illustrates a schematic block diagram for both the client device 102 and the makeup consultation device 132 in FIG. 1. Each of the client device 102 and the makeup consultation device 132 may be embodied in any one of a wide variety of wired and/or wireless computing devices, such as a desktop computer, portable computer, dedicated server computer, multiprocessor computing device, smart phone, tablet, and so forth. As shown in FIG. 2, each of these computing devices 102, 132 comprises memory 214, a processing device 202, a number of input/output interfaces 204, a network interface 206, a display 208, a peripheral interface 211, and mass storage 226, wherein each of these components are connected across a local data bus 210.

The processing device 202 may include any custom made or commercially available processor, a central processing unit (CPU) or an auxiliary processor among several processors associated with the client device 102, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 may include any one of a combination of volatile memory elements (*e*.*g*., random-access memory (RAM, such as DRAM, and SRAM, *etc*.)) and nonvolatile memory elements (*e.g.,* ROM, hard drive, tape, CDROM, *etc*.). The memory 214 typically comprises a native operating system 216, one or more native applications, emulation systems, or emulated applications for any of a variety of operating systems and/or emulated hardware platforms, emulated operating systems, *etc.* For example, the applications may include application specific software which may comprise some or all the components depicted in FIG. 1. In accordance with such embodiments, the components are stored in memory 214 and executed by the processing device 202, thereby causing the processing device 202 to perform the operations/functions for implementing the features disclosed herein. One of ordinary skill in the art will appreciate that the memory 214 can, and typically will, comprise other components which have been omitted for purposes of brevity. For some embodiments, the components in the client device 102 may be implemented by hardware and/or software.

Input/output interfaces 204 provide any number of interfaces for the input and output of data. For example, where the client device 102 comprises a personal computer, these components may interface with one or more user input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

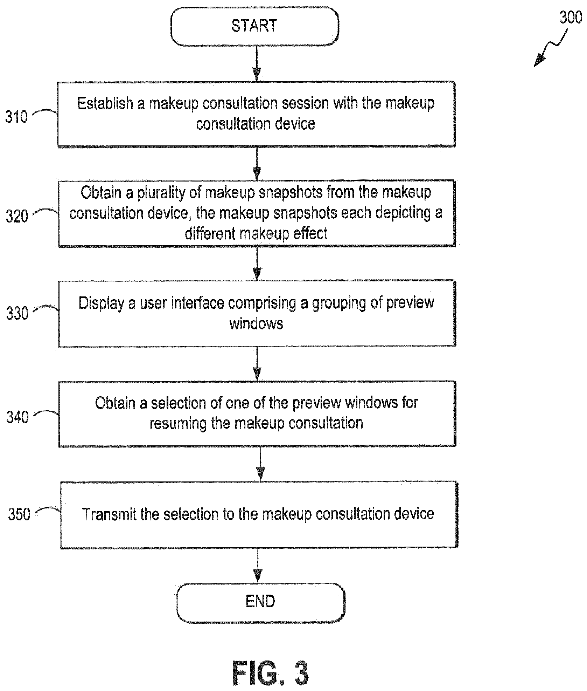

Reference is made to FIG. 3, which is a flowchart 300 in accordance with various embodiments for makeup consultation sessions utilizing the client device 102 in the networked environment of FIG. 1. It is understood that the flowchart 300 of FIG. 3 provides merely an example of the different types of functional arrangements that may be employed to implement the operation of the various components of the client device 102. As an alternative, the flowchart 300 of FIG. 3 may be viewed as depicting an example of steps of a method implemented in the client device 102 according to one or more embodiments.

Although the flowchart 300 of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

At block 310, the client device 102 establishes a makeup consultation session with the makeup consultation device 132 (FIG. 1). At block 320, the client device 102 obtains a plurality of makeup snapshots from the makeup consultation device 132, where each of the makeup snapshots depicts a different makeup effect on a digital image of the user. The different makeup effects may comprise different types of makeup effects (*e.g.,* lipstick versus eyeshadow) and/or variations of the same type of makeup effect (*e*.*g*., red lipstick versus pink lipstick). For some embodiments, the makeup snapshots are captured periodically by the makeup consultation device 132 according to a predetermined time interval. The makeup snapshots may also be captured by the makeup consultation device in response to manipulation of a user interface control by the makeup professional. For some embodiments, each of the makeup snapshots can be modified by either the user or the makeup professional.

At block 330, the client device displays a user interface to the user, where the user interface comprises a grouping of preview windows, each of the preview windows depicting one of the plurality of makeup snapshots. At block 340, the client device 102 obtains a selection of one of the preview windows for resuming the makeup consultation. In some instances, the user may wish to remove one or more preview windows from the user interface because such preview windows may depict undesirable makeup effects (for example, lipstick of a particular color). Thus, for some embodiments, the client device 102 may also obtain a selection for deleting one or more of the preview windows being displayed in the user interface, where the selected preview windows are then removed from the user interface. For some embodiments, the user may remove preview windows by performing a swipe gesture on the preview windows using a touchscreen display of the client device 102.

In some instances, the user may wish to obtain product information relating to a particular makeup effect depicted in one of the preview windows. For some embodiments, the user may select a preview window and in response, the client device 102 displays makeup product information corresponding to a makeup effect depicted in the selected preview window. The product information may comprise, for example, an image of a cosmetic product, textual information relating to a cosmetic product, cosmetic product purchasing information, a Uniform Resource Locator (URL) of an online retailer for a product web page selling a cosmetic product, and so on. At block 350, the client device 102 transmits the selection to the makeup consultation device, where the makeup professional resumes the makeup consultation based on the makeup snapshot depicted in the selected preview window.

For some embodiments, the client device 102 is further configured to obtain a selection of at least one of the preview windows for indicating one or more preview windows approved by the user. The selection made by the user is then transmitted to the makeup consultation device 132, where the client device 102 causes the makeup consultation device 132 to highlight the selected one or more preview windows approved by the user. The makeup professional then resumes the makeup consultation based on the makeup snapshots depicted in the one or more selected preview windows approved by the user. For some embodiments, the client device 102 obtains a selection for modifying one of the preview windows. The client device 102 receives a modification and applies the modification to the snapshot in the selected preview window and generates a new preview window depicting the modified snapshot. For some embodiments, the client device 102 is further configured to obtain a digital image of a different user (*e*.*g*., a friend of the user). The client device 102 obtains a selection of at least one of the preview windows and applies corresponding makeup effects depicted in the selected preview windows to the digital image of the different user. Thereafter, the process in FIG. 3 ends.

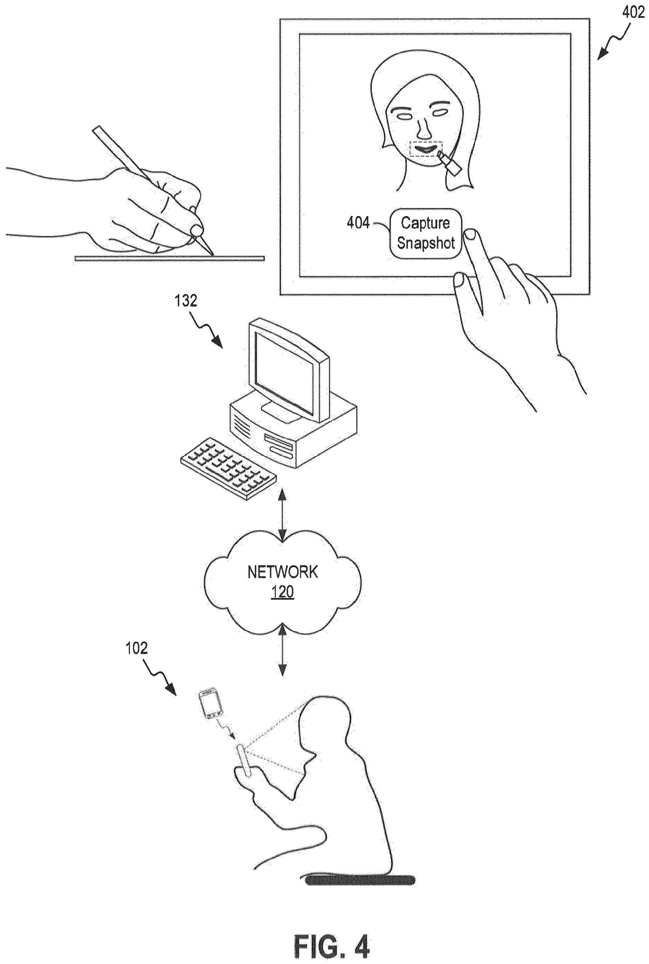

Having described the basic framework of a system for providing makeup consultation utilizing makeup snapshots, reference is made to the following figures, which further illustrate various features disclosed above. FIG. 4 illustrates an example user interface 402 displayed on the makeup consultation device 132. As discussed above, the makeup consultation device 132 may be embodied as a computing device such as, but not limited to, a smartphone, a tablet computing device, a laptop computer, and so on. As shown, a makeup professional may utilize a pen/stylus in conjunction with a trackpad or tablet coupled to the makeup consultation device 132 to precisely perform virtual application of makeup effects onto a facial region of the user of the client device 102. The makeup professional may also utilize a touchscreen interface of the makeup consultation device 132 for performing virtual application of makeup effects.

As discussed above, the makeup consultation device 132 captures makeup snapshots where the makeup snapshots may be captured periodically by the makeup consultation device 132 according to a predetermined time interval. For example, the makeup consultation device 132 may be configured to capture a makeup snapshot every 10 seconds. The makeup snapshots may also be captured by the makeup consultation device in response to manipulation of a user interface control by the makeup professional. In the example, shown, the makeup professional presses a button 404 on the user interface 402 to capture the makeup effect (e.g., lipstick). Each makeup snapshot and a corresponding timestamp is then sent to the client device 102.

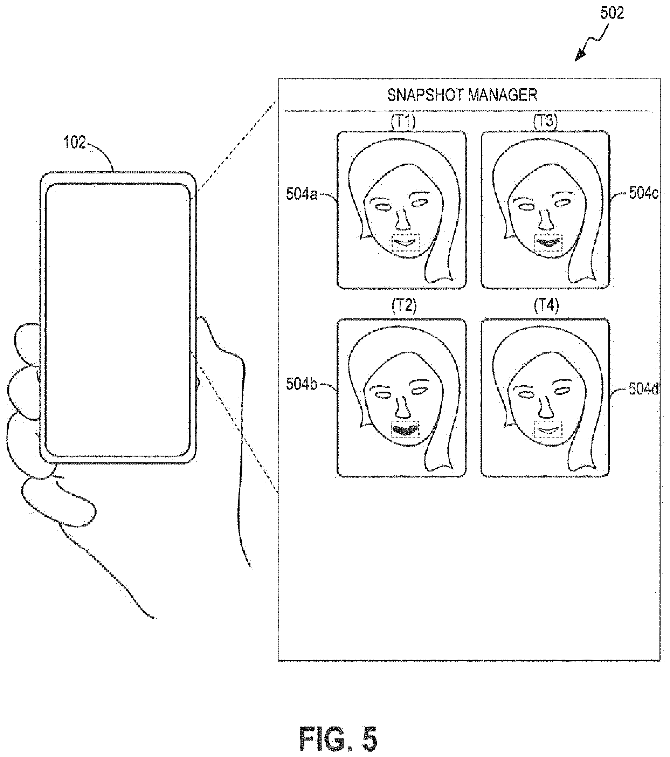

FIG. 5 illustrates an example user interface 502 displayed on the client device 102 where preview windows 504a, 504b, 504c, 504d depicting makeup snapshots obtained from the makeup consultation device 132 (FIG. 1) are displayed to the user. As shown, the preview windows 504a, 504b, 504c, 504d may be arranged according to their corresponding time stamps. As discussed above, the preview windows 504a, 504b, 504c, 504d may comprise variations of the same type of makeup effect. In the example shown, the preview windows 504a, 504b, 504c, 504d depict variations (e.g., different colors) of a lipstick makeup effect.

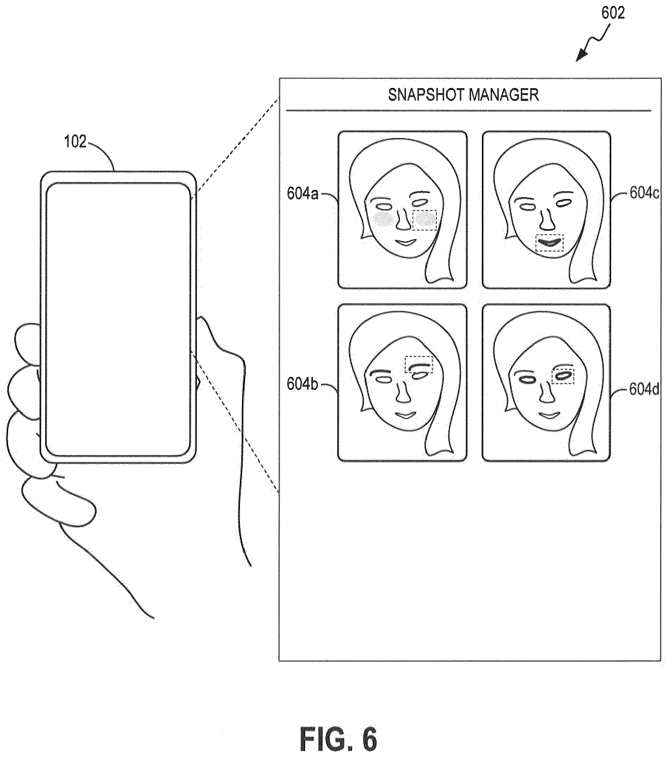

FIG. 6 illustrates another example user interface 602 displayed on the client device 102 where preview windows 604a, 604b, 604c, 604d depicting makeup snapshots obtained from the makeup consultation device 132 (FIG. 1) are displayed to the user. For some embodiments, the preview windows 604a, 604b, 604c, 604d depict different types of makeup effects. In the example shown, a first preview window 604a corresponding to a first makeup snapshot depicts a blush makeup effect. A second preview window 604b depicts a makeup effect for the eyebrows. A third preview window 604c depicts a lipstick makeup effect. A fourth preview window 604d depicts an eyeliner makeup effect.

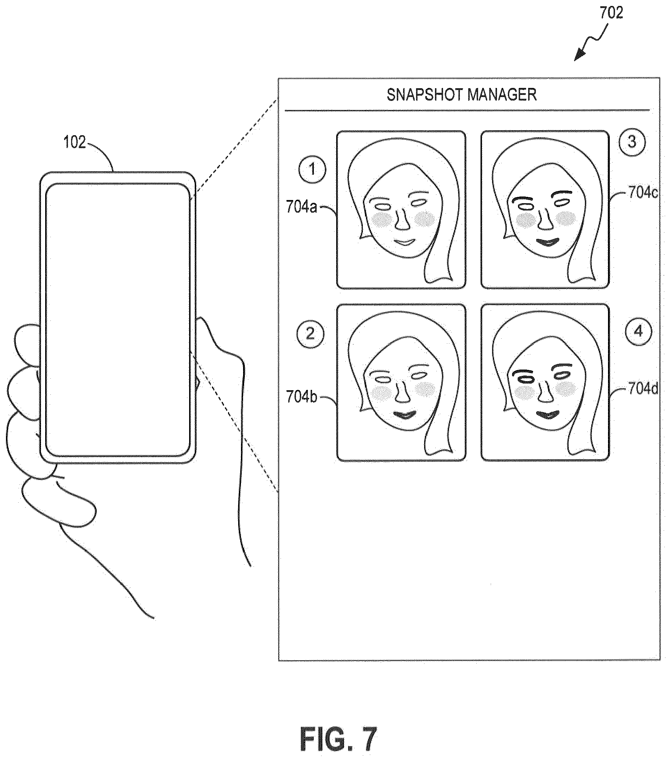

FIG. 7 illustrates another example user interface 702 displayed on the client device 102 where preview windows 704a, 704b, 704c, 704d depicting makeup snapshots obtained from the makeup consultation device 132 (FIG. 1) are displayed to the user. For some embodiments, the preview windows 704a, 704b, 704c, 704d depict progression of makeup effects applied by the makeup professional onto the user's facial region. In the example shown, a first preview window 704a depicts a blush makeup effect. A second preview window 704b depicts the addition of a makeup effect for the eyebrows (after application of the blush effect). A third preview window 704c depicts the addition of a lipstick makeup effect. A fourth preview window 704d depicts the addition of an eyeliner makeup effect.

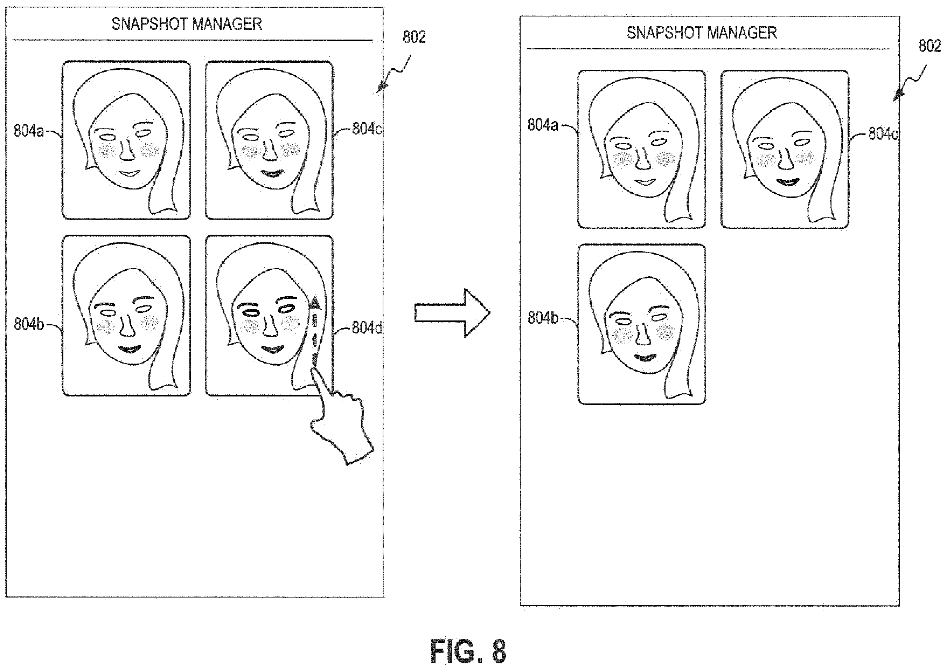

FIG. 8 illustrates another example user interface 802 displayed on the client device 102 where preview windows 804a, 804b, 804c, 804d depicting makeup snapshots obtained from the makeup consultation device 132 (FIG. 1) are displayed to the user. As discussed above, the client device 102 may obtain a selection for deleting one or more of the preview windows 704a, 704b, 704c, 704d being displayed in the user interface 802, where the selected preview windows are then removed from the user interface 802. For some embodiments, the user may remove preview windows by performing a swipe gesture on the preview windows using a touchscreen display of the client device 102. In the example shown, the user removes the bottom-right preview window 804d by performing an upward gesture on the preview window 804d. As shown, this causes the selected preview window 804d to be removed from the user interface 802.

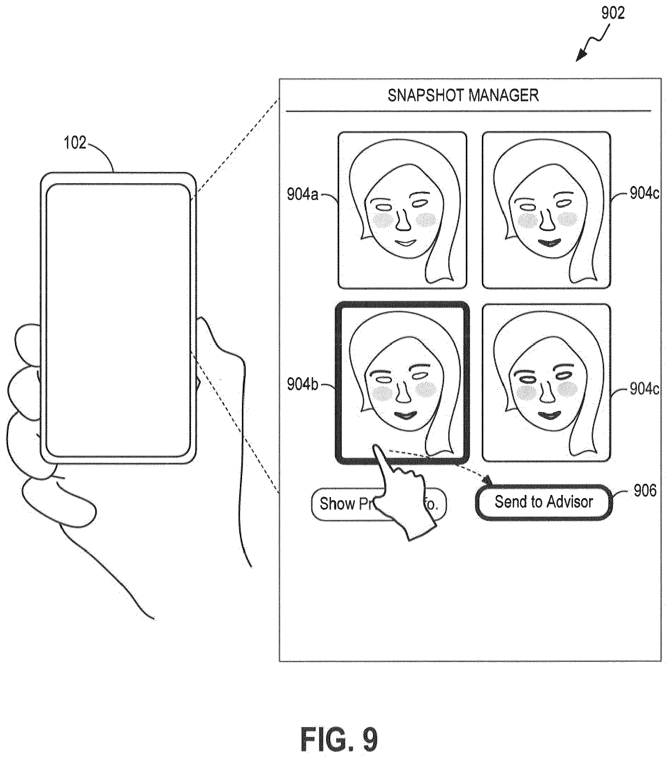

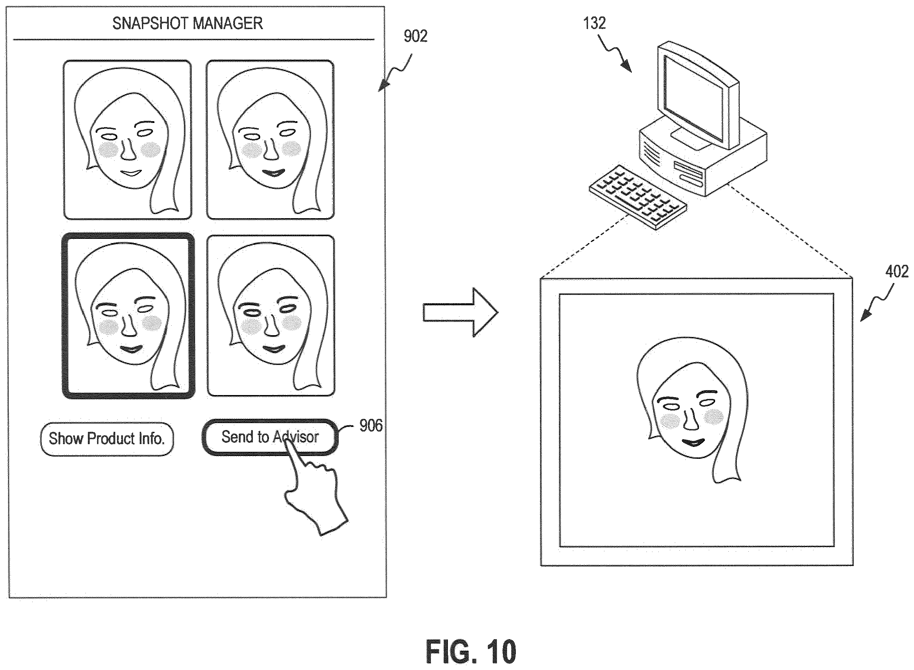

FIG. 9 illustrates selection of a makeup snapshot for purposes of resuming the makeup consultation. The example user interface 902 shows preview windows 904a, 904b, 904c, 904d depicting makeup snapshots obtained from the makeup consultation device 132 (FIG. 1) are displayed to the user. In the example shown, the user wishes to resume the makeup consultation using the makeup effect depicted in the lower-left preview window 904b. Upon selection of the preview window 904b, the user may press a button 906 in the user interface 902 to cause the makeup snapshot associated with the selected preview window 904b to be sent to the makeup consultation device 132. Upon receipt of the selected makeup snapshot, the makeup professional may then continue to apply suggested makeup effects to the makeup effect depicted in the selected preview window 904b, as illustrated in FIG. 10. Note that the makeup snapshots can be modified by either the user or the makeup professional.

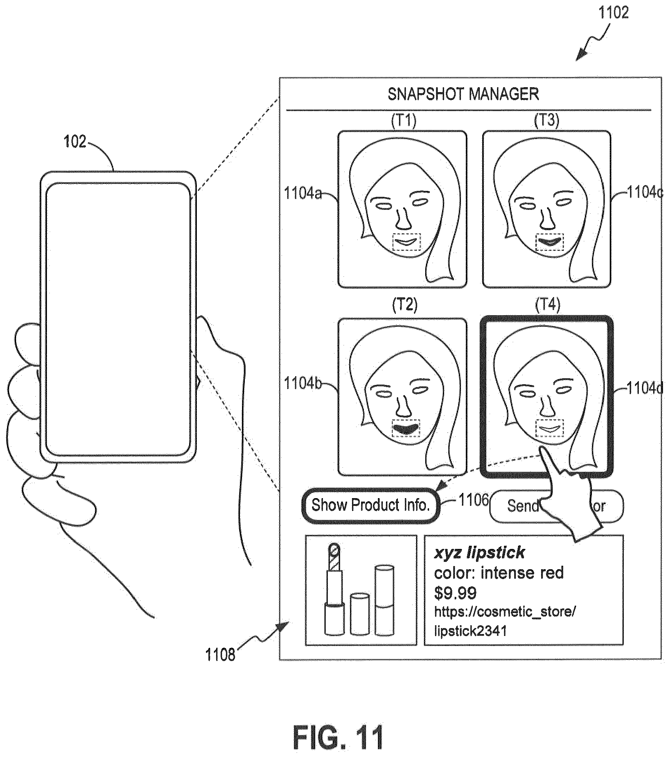

FIG. 11 illustrates selection of a makeup snapshot for purposes of obtaining product information relating to the makeup effect depicted in the selected preview window. The example user interface 1102 shows preview windows 1104a, 1104b, 1104c, 1104d depicting makeup snapshots obtained from the makeup consultation device 132 (FIG. 1) are displayed to the user. In the example shown, the user selects the bottom-right preview window 1104c. Upon selection of the preview window 1104d, the user may press a button 1106 in the user interface 902 to cause product information 1108 to be displayed in the user interface 1102. As discussed above, the product information may comprise an image of a cosmetic product, textual information relating to a cosmetic product, cosmetic product purchasing information, a Uniform Resource Locator (URL) of an online retailer for a product web page selling a cosmetic product, and so on.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a client device utilized by a user receiving a makeup consultation from a makeup professional utilizing a makeup consultation device, comprising:
establishing a makeup consultation session with the makeup consultation device;
obtaining a plurality of makeup snapshots from the makeup consultation device, the makeup snapshots each depicting a different makeup effect on a digital image of the user;
displaying a user interface to the user, the user interface comprising a grouping of preview windows, each of the preview windows depicting one of the plurality of makeup snapshots;
obtaining a selection of one of the preview windows for resuming the makeup consultation; and
transmitting the selection to the makeup consultation device, wherein the makeup professional resumes the makeup consultation based on the makeup snapshot depicted in the selected preview window.

2. The method of claim 1, wherein the makeup snapshots are captured periodically by the makeup consultation device according to a predetermined time interval.

3. The method of claim 1 or 2, wherein the makeup snapshots are captured by the makeup consultation device in response to manipulation of a user interface control by the makeup professional.

4. The method of one of claims 1 to 3, further comprising:
obtaining a selection for deleting at least one of the preview windows; and
removing the at least one selected preview window from the grouping of preview windows displayed in the user interface.

5. The method of claim 4, wherein obtaining the selection for deleting at least one of the preview windows comprises detecting a gesture performed on the at least one of the preview windows on a touchscreen display of the client device.

6. The method of one of claims 1 to 5, wherein each of the makeup snapshots can be modified by either the user or the makeup professional.

7. The method of one of claims 1 to 6, further comprising:
obtaining a selection of at least one of the preview windows for indicating one or more preview windows approved by the user; and
transmitting the selection to the makeup consultation device and causing the makeup consultation device to highlight the one or more selected preview windows approved by the user, wherein the makeup professional resumes the makeup consultation based on the makeup snapshots depicted in the one or more selected preview windows approved by the user.

8. The method of one of claims 1 to 7, further comprising:
obtaining a selection for modifying one of the preview windows;
receiving a modification; and
applying the modification to a snapshot in the selected preview window and generating a new preview window depicting the modified snapshot.

9. The method of one of claims 1 to 8, further comprising:
obtaining a digital image of a different user;
obtaining a selection of at least one of the preview windows; and
applying corresponding makeup effects depicted in the one or more selected preview windows to the digital image of the different user.

10. The method of one of claims 1 to 9, wherein each of the plurality of makeup snapshots comprises a different type of makeup effect.

11. The method of one of claims 1 to 10, wherein each of the plurality of makeup snapshots comprises a variation of a makeup effect type.

12. The method of one of claims 1 to 11, further comprising:
obtaining a selection of one the preview windows for displaying makeup product information corresponding to a makeup effect depicted in the selected preview window; and
displaying the makeup product information.

13. The method of claim 12, wherein the product information comprises at least one of:
an image of a cosmetic product;
textual information relating to a cosmetic product;
cosmetic product purchasing information; and
a Uniform Resource Locator (URL) of an online retailer for a product web page selling a cosmetic product.

14. A system, comprising:
a memory storing instructions;
a processor coupled to the memory and configured by the instructions to at least perform a method of one of claims 1 to 13.

15. A non-transitory computer-readable storage medium storing instructions to be implemented by a computing device having a processor, wherein the instructions, when executed by the processor, cause the computing device to at least perform a method of one of claims 1 to 13.
